# EUROPÄISCHE PATENTSCHRIFT

(11) **EP 3 256 750 B1**
(45) Veröffentlichungstag und Bekanntmachung des Hinweises auf die Patenterteilung: **05.02.2020**
(21) Anmeldenummer: 15808101.8
(22) Anmeldetag: 18.11.2015
(51) Int. Cl.: F16D 65/00, F16D 65/18, H02K 7/102

(54) **BREMSANORDNUNG MIT EINEM BREMSBELAGTRÄGER UND EINEM MITNEHMER**
BRAKE ARRANGEMENT HAVING A BRAKE LINING CARRIER AND A DRIVER
SYSTÈME DE FREINAGE POURVU D'UN SUPPORT DE GARNITURE DE FREIN ET D'UN ENTRAÎNEUR

(30) Priorität: 09.02.2015 DE 102015001442
(43) Veröffentlichungstag der Anmeldung: 20.12.2017
(73) Patentinhaber: SEW-EURODRIVE GmbH & Co. KG, 76646 Bruchsal (DE)
(72) Erfinder: GANDYRA, Manuel, 75015 Bretten (DE); ASCHOFF, Stefan, 64297 Darmstadt (DE)
(86) Internationale Anmeldenummer: PCT/EP2015/002302
(87) Internationale Veröffentlichungsnummer: WO 2016/128010

(56) Entgegenhaltungen:
- DE-A1- 19 506 517
- DE-A1-102009 034 123
- DE-C1- 3 844 476

## Beschreibung

Die Erfindung betrifft eine Bremsanordnung mit einem Bremsbelagträger und einem Mitnehmer.

Es ist allgemein bekannt, dass eine Bremsanordnung einen Bremsbelag aufweist, der beim Betätigen der Bremsanordnung gegen eine Gegenbremsfläche gedrückt wird.

Aus der DE 38 44 476 C1 ist eine Reibungskupplung mit Dämpfungselementen bekannt.

Aus der DE 10 2009 034123 A1 ist eien elektromagnetisch betätigbare Vorrichtung zum Bremsen bekannt.

Aus der DE 195 06 517 A1 ist ein Wellenkupplungsaufbau einer Antriebswelle bekannt.

Der Erfindung liegt daher die Aufgabe zugrunde, eine Bremsanordnung mit geringer Geräuschemission auszubilden.

Erfindungsgemäß wird die Aufgabe bei der Bremsanordnung nach den in Anspruch 1 angegebenen Merkmalen gelöst.

Wichtige Merkmale der Erfindung bei der Bremsanordnung mit einem Bremsbelagträger und einem Mitnehmer sind, dass der Bremsbelagträger drehfest aber axial verschiebbar mit dem Mitnehmer verbunden ist,
wobei der Bremsbelagträger eine Innenverzahnung aufweist, die im Eingriff steht mit einer Außenverzahnung des Mitnehmers,
**wobei** ein Dämpfungsteil zwischen Bremsbelagträger und Mitnehmer angeordnet ist,
wobei das Dämpfungsteil im Bereich eines fehlenden Zahns der ansonsten in Umfangsrichtung regelmäßig voneinander beabstandete Zähne aufweisenden Innenverzahnung des Bremsbelagträgers angeordnet ist.

Fertigungsfehler der jeweiligen Verzahnung, insbesondere Profil- und Flankenlinienabweichungen, wie sie in jeder industriellen Fertigung vorkommen, führen zu Kipp- und Nickbewegungsfreiheitsgraden. Entsprechende Bewegungen verursachen Laufgeräusche.

Von Vorteil ist bei der Erfindung, dass Kippbewegungen und Nickbewegungen gedämpft werden, da ein bei Nichtvorhandensein des Dämpfungsteils eventuell vorhandenes Drehspiel zwischen Mitnehmer und Bremsbelagträger mittels des Dämpfungsteils gedämpft wird. Hierbei wird das Dämpfungsteil elastisch deformiert und erzeugt somit eine entsprechende Rückstellkraft. Der Bremsbelagträger ist also im Betrieb stabilisiert.

Das Dämpfungsteil ist also derart dimensioniert, dass schon beim Einbau eine nicht verschwindende elastische Auslenkung vorhanden ist. Eine Linienberührung zwischen Mitnehmer und Bremsbelagträger ist somit als entsprechend breite Linie ausgeführt.

Bei einer vorteilhaften Ausgestaltung ist die Bremsanordnung elektromagnetisch betätigbar, wobei eine elektrisch bestrombare Spulenwicklung in einem Spulenkern aufgenommen ist,
wobei eine Ankerscheibe drehfest aber axial verschiebbar mit dem Spulenkern verbunden ist,
wobei ein Federelement auf die Ankerscheibe drückt, das am Spulenkern abgestützt ist,
wobei die Ankerscheibe zwischen Spulenkern und Bremsbelagträger angeordnet ist,

insbesondere wobei auf der vom Spulenkern und der Ankerscheibe abgewandten Seite des Bremsbelagträgers eine Gegenbremsfläche angeordnet ist. Von Vorteil ist dabei, dass die Bremsanordnung elektromagnetisch betätigbar ist. Bei Bestromung wird die Bremsanordnung gelüftet und bei Nicht-Bestromung der Spulenwicklung fällt die Bremsanordnung ein. Hierzu ist die Ankerscheibe aus ferromagnetischem Material ausgeführt und wird beim Bestromen der Spulenwicklung vom Bremsbelagträger weg hin zum Spulenkern gezogen. Bei Nicht-Bestromung drücken die Federelemente die Ankerscheibe gegen den Bremsbelagträger, so dass dieser auf eine Gegenbremsfläche gedrückt wird. Diese ist entweder auf einem Lagerschild eines Elektromotors angeordnet oder auf einem anderen gehäusebildenden Teil.

Erfindungsgemäß ist das Dämpfungsteil aus einem Elastomer und/oder aus einem Gummi gefertigt,
insbesondere wobei das Dämpfungsteil einstückig, also einteilig, ausgeführt ist. Von Vorteil ist dabei, dass eine Absorption der Schwingungsenergie ausgeführt wird.

Erfindungsgemäß weist das Dämpfungsteil eine axial durchgehende Ausnehmung auf,
wobei das Dämpfungsteil eine weitere axial durchgehende Ausnehmung aufweist, die auf einem größeren Radialabstand angeordnet ist als die erste axial durchgehende Ausnehmung, insbesondere welche einen größeren lichten Innendurchmesser aufweist als die weitere axial durchgehende Ausnehmung. Von Vorteil ist dabei, dass mittels der Ausnehmung die Federkennlinie vorgebbar ist, insbesondere die durchschnittliche Steigung im Kraft-Auslenkungsweg-Diagramm.

Erfindungsgemäß weist das Dämpfungsteil an seinem axialen Endbereich einen Sicherungsabschnitt auf, der an der Stirnseite des Bremsbelagträgers anliegt, insbesondere wobei das Dämpfungsteil mit Sicherungsabschnitt in Umfangsrichtung einen größeren Bereich überdeckt als die Ausnehmung des Dämpfungsteils. Von Vorteil ist dabei, dass bei der Montage ein Verrutschen des Dämpfungsteils relativ zum Bremsbelagträger unterdrückbar ist.

Bei einer vorteilhaften Ausgestaltung weist das Dämpfungsteil einen zylindrischen, insbesondere kreiszylindrischen, auf, mit welchem das Dämpfungsteil an einer Zahnflanke eines Zahnes der Außenverzahnung des Mitnehmers anliegt, insbesondere so dass eine Linienberührung zwischen Dämpfungsteil und Mitnehmer vorhanden ist. Von Vorteil ist dabei, dass keine Flächenberührung sondern eine Linienberührung zwischen Mitnehmer und Bremsbelagträger stattfindet. Somit ist die Reibung bei Verschiebung des Dämpfungsteils in axialer Richtung gegenüber dem Mitnehmer reduzierbar.

Bei einer vorteilhaften Ausgestaltung ist das Dämpfungsteil an seiner dem Mitnehmer zugewandten Endbereich abgeflacht ausgeführt,
insbesondere wobei diese Abflachung zum Zahnlückengrund einer Zahnlücke der Außenverzahnung des Mitnehmers hin ausgerichtet ist. Von Vorteil ist dabei, dass die Berührfläche zum Mitnehmer hin reduzierbar ist und somit die Reibung bei Verschiebung des Dämpfungsteils in axialer Richtung gegenüber dem Mitnehmer reduzierbar ist.

Bei einer vorteilhaften Ausgestaltung weist das Dämpfungsteil an einem oder an beiden axialen Endbereichen eine Fase auf, insbesondere zum Einfädeln des mit dem Bremslagerschild verbundenen Dämpfungsteils in die Außenverzahnung des Mitnehmers. Von Vorteil ist dabei, dass das Einfädeln vereinfacht ist.

Bei einer vorteilhaften Ausgestaltung umfasst der vom Dämpfungsteil überdeckte axiale Bereich den von der Innenverzahnung des Bremsbelagträgers überdeckten axialen Bereich. Von Vorteil ist dabei, dass am Dämpfungsteil mittels des axial den Bremsbelagträger überragenden Abschnitts ein Anschlag ausbildbar ist, so dass eine axiale Sicherheit ausbildbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist ein auf einen Mitnehmer 1 aufgesteckter Bremsbelagträger 2 einer erfindungsgemäßen elektromagnetisch betätigbaren Bremse im Querschnitt gezeigt, wobei der Mitnehmer 1 eine Außenverzahnung und der Bremsbelagträger 2 eine entsprechende Innenverzahnung aufweist.

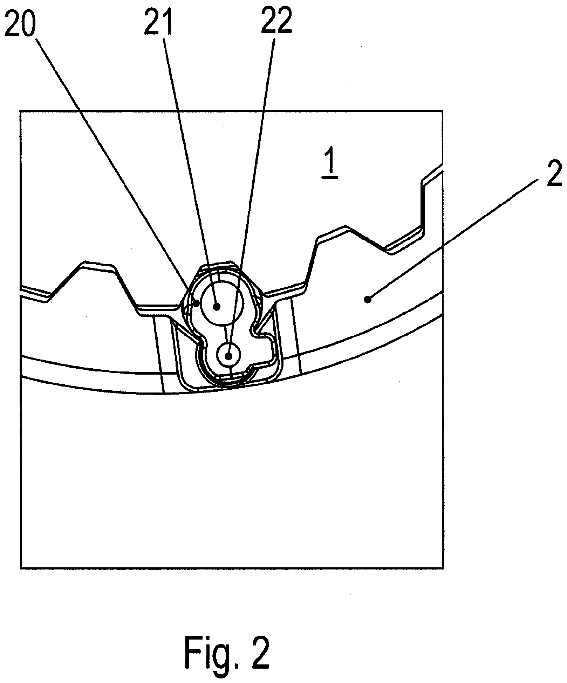

In der Figur 2 ist ein in einem Bereich eines fehlenden Zahns der Innenverzahnung des Bremsbelagträgers 2 angeordnetes Dämpfungsteil 20 in Draufsicht gezeigt.

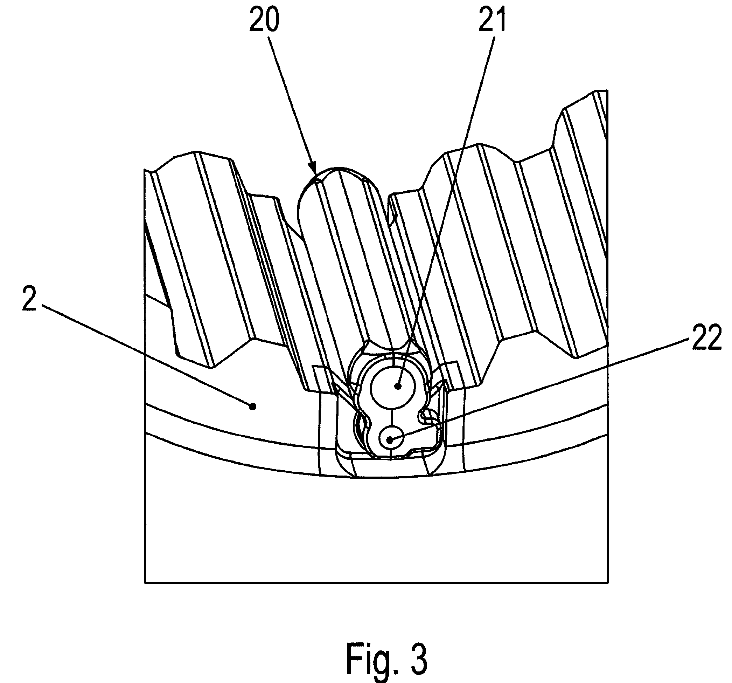

In der Figur 3 ist eine zugehörige Schrägansicht gezeigt, wobei der Mitnehmer 1 ausgeblendet ist.

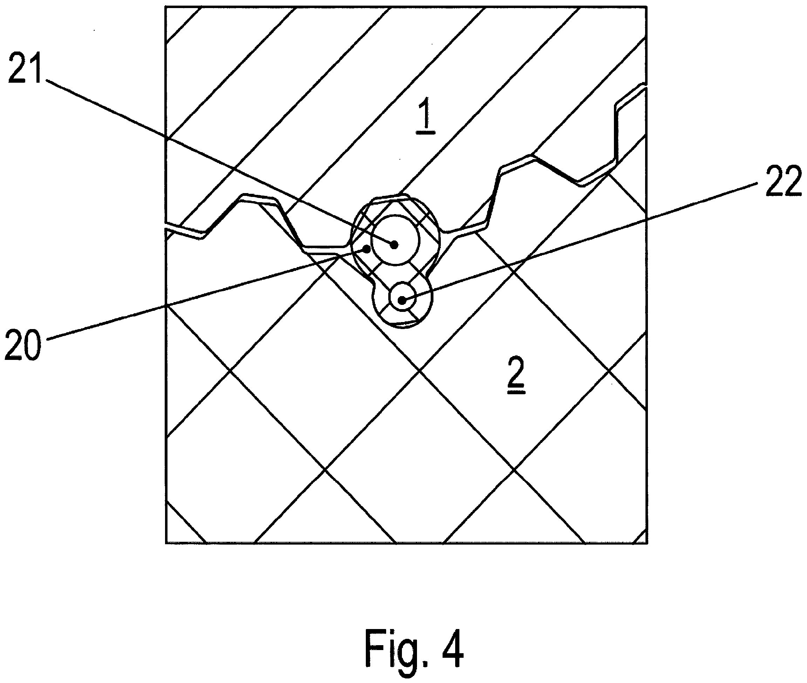

In der Figur 4 ist ein zur Figur 2 zugehöriger Querschnitt gezeigt.
In der Figur 5 ist das Dämpfungsteil 20 in Schrägansicht gezeigt, wobei das Dämpfungsteil 20 eine durchgehende Ausnehmung 21 aufweist.
In der Figur 6 sind zu verschiedenen lichten Innendurchmessern der Ausnehmung 21 zugehörige Federkennlinien (60, 61) des Dämpfungsteils 20 gezeigt.

Wie in den Figuren gezeigt, weist der Mitnehmer 1 eine Außenverzahnung auf. Diese Außenverzahnung weist vorzugsweise keinen Schrägungswinkel auf, ist geradverzahnt. Der Mitnehmer 1 ist hierbei insbesondere mittels Passfederverbindung mit einer Welle, beispielsweise Rotorwelle eines Elektromotors, formschlüssig verbunden.

Die Zähne der Außenverzahnung erstrecken sich somit in axialer Richtung.

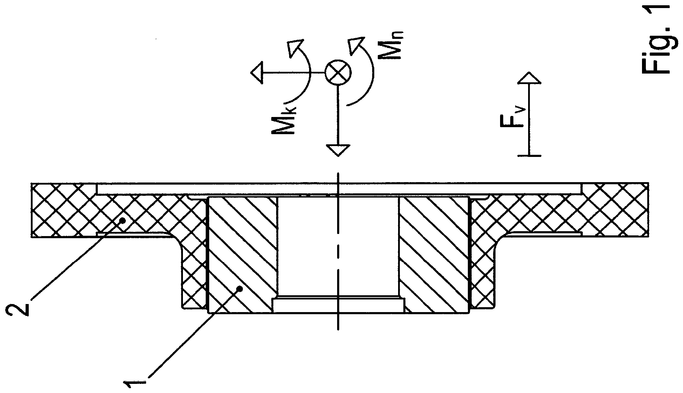

Der Mitnehmer 1 ist aus Metall, insbesondere Stahl, gefertigt. Der Bremsbelagträger ist vorzugsweise einstückig aus Bremsbelagmaterial gefertigt. Wie in Figur 1 gezeigt, ist zum Aufstecken des Bremsbelagträgers 2 in axialer Richtung eine Reibungskraft F_v zu überwinden. Im Betrieb treten bei Beschleunigungen, also Änderungen der Drehzahl, Kippmoment M_k und Nickmoment M_n auf, die zu entsprechenden Kippbewegungen und/oder Nickbewegungen des Bremsbelagträgers führen. Die zugehörigen Drehachsen sind in Figur 1 gezeigt.

Zur Unterdrückung solcher Bewegungen ist ein Dämpfungsteil 20 vorgesehen, welches zwischen Mitnehmer 1 und Bremsbelagträger 2 angeordnet ist.

Das Dämpfungsteil 20 ist im Bereich eines fehlenden Zahns der Innenverzahnung des Bremsbelagträgers 2 angeordnet. Die restlichen Zähne der Innenverzahnung sind in Umfangsrichtung regelmäßig voneinander beabstandet. Jeder der vorhandenen Zähne der Innenverzahnung ragt in eine Zahnlücke der Außenverzahnung des Mitnehmers zumindest teilweise hinein.

Das Dämpfungsteil 20 ist also in dem Bereich des fehlenden Zahns der Innenverzahnung angeordnet und ragt in die entsprechende Zahnlücke der Außenverzahnung des Mitnehmers zumindest teilweise hinein. Außerdem erstreckt sich das Dämpfungsteil 20 in axialer Richtung über die gesamte axiale Länge des Bremsbelagträgers 2. Der von dem Dämpfungsteil 20 in axialer Richtung überdeckte Bereich umfasst also den von der Innenverzahnung des Bremsbelagträgers 2 überdeckten axialen Bereich.

An einem axialen Endbereich des Dämpfungsteils 20 ist ein Sicherungsabschnitt 50 ausgeformt, der stirnseitig am Bremsbelagträger 2 anliegt und somit als axial einseitige Verschiebesicherung des Dämpfungsteils 20 zum Bremsbelagträger 2 fungiert.

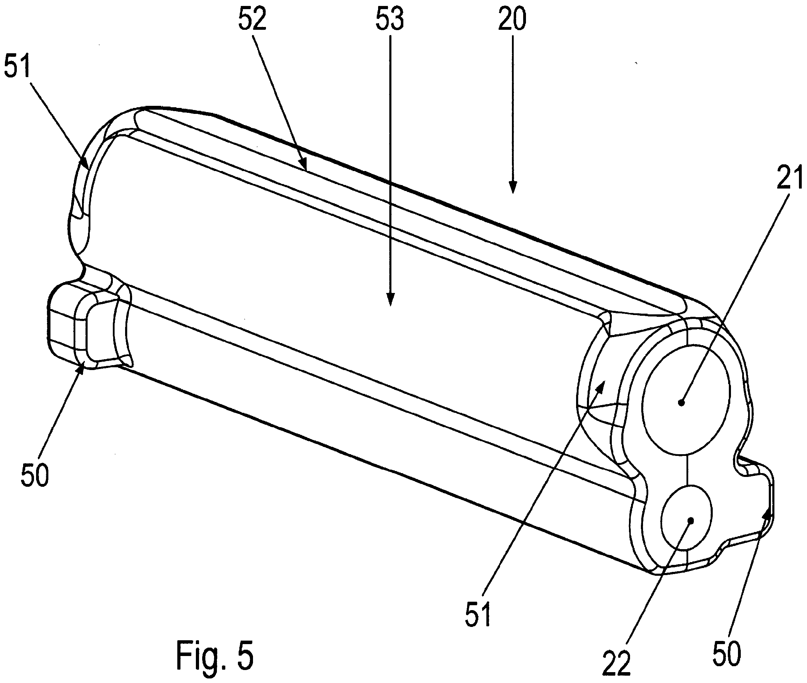

Wie in Figur 5 gezeigt, ist auch am anderen axialen Endbereich des Dämpfungsteils 20 ist ein Sicherungsabschnitt 50 ausgeformt, der an der anderen Stirnseite am Bremsbelagträger 2 anliegt und somit als axiale Verschiebesicherung des Dämpfungsteils 20 zum Bremsbelagträger 2 fungiert, die in entgegengesetzter Richtung zur Wirkrichtung der obengenannten Verschiebesicherung wirkt.

Das Dämpfungsteil 20 weist einen Kreiszylinderabschnitt 53 auf, wobei die Zylinderachse in axialer Richtung ausgerichtet ist. Somit ist eine Linienberührung zwischen Dämpfungsteil 20 und dem jeweils berührenden Zahn des Mitnehmers 1 vorhanden, wodurch die Reibungskraft bei Verschieben des Bremsbelagträgers 2 und somit auch des Dämpfungsteils 20 gegenüber dem Mitnehmer 1 klein haltbar ist. Dies ist wichtig, um den Betrieb der Bremse nicht zu beeinträchtigen.

Auf der dem Mitnehmer 1 zugewandten Kopfseite des Dämpfungsteils 20 weist dieses einen abgeflachten Abschnitt 52 auf, so dass Berührung des Zahnlückengrundes der zum Dämpfungsteil 20 korrespondierenden Zahnlücke des Mitnehmers 1 verhindert ist, wodurch wiederum die Reibung beim Verschieben klein haltbar ist. Dies ist wichtig, um den Betrieb der Bremse nicht zu beeinträchtigen.

Zum Einfädeln in den Bereich des fehlenden Zahns der Innenverzahnung des Bremsbelagträgers weist das Dämpfungsteil 20 jeweils eine Fase 51 auf an ihrem jeweiligen axialen Endbereich.

Durch den Sicherungsabschnitt 50 ist das Dämpfungsteil 20 in Umfangsrichtung weiter ausgedehnt als der Aufnahmebereich im Bremsbelagträger 2, also als der Bereich des fehlenden Zahns des Bremsbelagträgers 2.

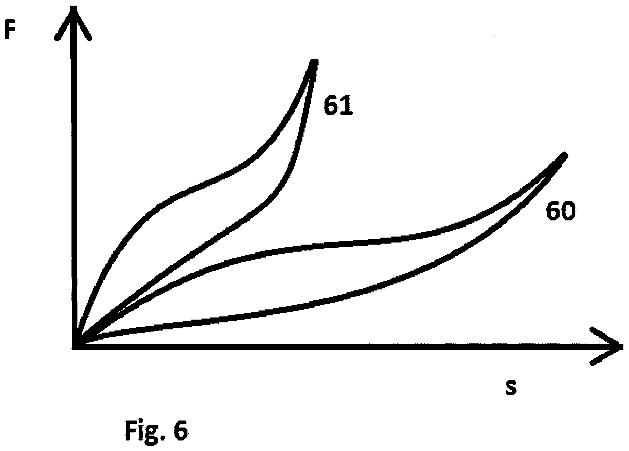

Eine axial durchgehende Ausnehmung 21 im Dämpfungsteil 20 bestimmt wesentlich die Wandstärke des Dämpfungsteils 21 und somit auch die Feder-Kennlinie des Dämpfungsteils 20 bei Verdrehung des Mitnehmers relativ zum Bremsbelagträger 2. In Figur 6 sind für zwei verschieden großen Ausnehmungen 21 die zugehörigen Federkennlinien (60, 61) gezeigt.

Die Federkennlinien weisen jeweils Hysteresen auf, die für Gummi und ähnliche Elastomere typisch sind. Somit ist eine Absorption der Energie von ins Dämpfungsteil eingetragenen Schwingungen ausführbar. Insbesondere werden hierbei Kippschwingungen und Nickschwingungen gedämpft.

Eine weitere durchgehende, zur Ausnehmung 21 parallel angeordnete und beabstandete Ausnehmung 22 reduziert ebenfalls das Gewicht des Dämpfungsteils, wobei diese weitere Ausnehmung 22 auf größerem Radialabstand angeordnet ist als die erste Ausnehmung 21.

Entsprechend der zum Dämpfungsteil 20 zugehörigen Federkennlinie (60 oder 61) werden die Kipp- und/oder Nick-Bewegungen abgedämpft.

Das Dämpfungsteil 20 ist erfindungsgemäß einstückig ausgebildet und aus einem Elastomer und/oder Gummi gefertigt.

Die Bremse weist außerdem einen Elektromagnet auf, also eine Spulenwicklung mit einem Spulenkern. Dabei ist die Spulenwicklung in einer Ringnut des Spulenkerns eingelegt, wobei die Ringachse axial ausgerichtet ist und die Ringnut an der dem Bremsbelagträger zugewandten Oberfläche des Spulenkerns angeordnet ist.

Eine zwischen Spulenkern beziehungswiese Spulenwicklung angeordnete Ankerscheibe aus ferromagnetischem Material, wie Stahl oder dergleichen, wird bei Bestromung der Spulenwicklung entgegen der Kraft von Federelementen zum Spulenkern hin angezogen. Dabei drücken die Federelemente jeweils auf die ankerschiebe und sind abgestützt am Spulenkern.

Die Ankerscheibe ist drehfest aber axial bewegbar mit dem Spulenkern verbunden Dies wird erreichbar durch Führungselemente, insbesondere Führungsbolzen, die mit dem Spulenkern lösbar verbunden sind und die Ankerscheibe führen. Im unbestromten Zustand der Spulenwicklung drücken die Federelemente die Ankerscheibe auf den Bremsbelagträger, so dass dieser axial verschoben wird und auf eine Gegenbremsfläche eines Teils, wie Lagerschild oder Gehäuseteil des Elektromotors oder eine mit dem Gehäuse der Bremse oder des Motors drehfest und unverschiebbar verbundene Bremsscheibe, drückt.

Der Bremsbelagträger ist mit seiner mittig ausgerichteten Innenverzahnung axial verschiebbar aber drehfest mit der Außenverzahnung des Mitnehmers verbunden.

Der Mitnehmer ist aus Metall gefertigt, vorzugsweise aus Stahl. Der Spulenkern ist vorzugsweise aus Stahlguss gefertigt, wie GGG Sphäroguss oder dergleichen.

Bei einem weiteren erfindungsgemäßen Ausführungsbeispiel ist nur eine einzige Verschiebesicherung, also ein einziger Sicherungsabschnitt 50, ausgebildet.

### Bezugszeichenliste

1 Mitnehmer
2 Bremsbelagträger
20 Dämpfungsteil
21 durchgehende Ausnehmung
22 weitere durchgehende Ausnehmung
50 Sicherungsabschnitt
51 Fase, insbesondere Einfädelfase
52 Abflachung
53 Zylinderabschnitt, insbesondere Kreiszylinderabschnitt
60 Federkennlinie bei erstem Durchmesser der durchgehenden Ausnehmung 21
61 Federkennlinie bei zweitem Durchmesser der durchgehenden Ausnehmung 21

## Patentansprüche

1. Bremsanordnung mit einem Bremsbelagträger (2) und einem Mitnehmer (1),
wobei der Bremsbelagträger (2) drehfest aber axial verschiebbar mit dem Mitnehmer (1) verbunden ist,
wobei der Bremsbelagträger (2) eine Innenverzahnung aufweist, die im Eingriff steht mit einer Außenverzahnung des Mitnehmers (1),
**wobei** ein Dämpfungsteil (20) zwischen Bremsbelagträger (2) und Mitnehmer (1) angeordnet ist,
wobei das Dämpfungsteil (20) im Bereich eines fehlenden Zahns der ansonsten in Umfangsrichtung regelmäßig voneinander beabstandete Zähne aufweisenden Innenverzahnung des Bremsbelagträgers (2) angeordnet ist,
**dadurch gekennzeichnet, dass**
das Dämpfungsteil (20) aus einem Elastomer und/oder aus einem Gummi gefertigt ist,
wobei das Dämpfungsteil (20) einstückig, also einteilig, ausgeführt ist,
wobei das Dämpfungsteil (20) eine axial durchgehende Ausnehmung (21) aufweist,
wobei das Dämpfungsteil (20) eine weitere axial durchgehende Ausnehmung (22) aufweist, die auf einem größeren Radialabstand angeordnet ist als die erste axial durchgehende Ausnehmung (21),
insbesondere welche einen größeren lichten Innendurchmesser aufweist als die weitere axial durchgehende Ausnehmung (22),
wobei das Dämpfungsteil (20) an seinem axialen Endbereich einen Sicherungsabschnitt (50) aufweist, der an der Stirnseite des Bremsbelagträgers (2) anliegt.

2. Bremsanordnung nach Anspruch 1,
**dadurch gekennzeichnet, dass**
die Bremsanordnung elektromagnetisch betätigbar ist, wobei eine elektrisch bestrombare Spulenwicklung in einem Spulenkern aufgenommen ist,
wobei eine Ankerscheibe drehfest aber axial verschiebbar mit dem Spulenkern verbunden ist,
wobei ein Federelement auf die Ankerscheibe drückt, das am Spulenkern abgestützt ist,
wobei die Ankerscheibe zwischen Spulenkern und Bremsbelagträger (2) angeordnet ist,
insbesondere wobei auf der vom Spulenkern und der Ankerscheibe abgewandten Seite des Bremsbelagträgers (2) eine Gegenbremsfläche angeordnet ist.

3. Bremsanordnung nach mindestens einem der vorangegangenen Ansprüche,
**dadurch gekennzeichnet, dass**
das Dämpfungsteil (20) mit Sicherungsabschnitt (50) in Umfangsrichtung einen größeren Bereich überdeckt als die Ausnehmung (21) des Dämpfungsteils (20).

4. Bremsanordnung nach mindestens einem der vorangegangenen Ansprüche,
**dadurch gekennzeichnet, dass**
das Dämpfungsteil (20) einen zylindrischen, insbesondere kreiszylindrischen, **Abschnitt** aufweist, mit welchem das Dämpfungsteil (20) an einer Zahnflanke eines Zahnes der Außenverzahnung des Mitnehmers (1) anliegt, insbesondere so dass eine Linienberührung zwischen Dämpfungsteil (20) und Mitnehmer (1) vorhanden ist.

5. Bremsanordnung nach mindestens einem der vorangegangenen Ansprüche,
**dadurch gekennzeichnet, dass**
das Dämpfungsteil (20) an seiner dem Mitnehmer (1) zugewandten Endbereich abgeflacht ausgeführt ist,
insbesondere wobei diese Abflachung zum Zahnlückengrund einer Zahnlücke der Außenverzahnung des Mitnehmers (1) hin ausgerichtet ist.

6. Bremsanordnung nach mindestens einem der vorangegangenen Ansprüche,
**dadurch gekennzeichnet, dass**
das Dämpfungsteil (20) an einem oder an beiden axialen Endbereichen eine Fase (51) aufweist, insbesondere zum Einfädeln des mit dem Bremslagerschild verbundenen Dämpfungsteils (20) in die Außenverzahnung des Mitnehmers (1).

7. Bremsanordnung nach mindestens einem der vorangegangenen Ansprüche,
**dadurch gekennzeichnet, dass**
der vom Dämpfungsteil (20) überdeckte axiale Bereich den von der Innenverzahnung des Bremsbelagträgers (2) überdeckten axialen Bereich umfasst.

## Claims

1. A braking arrangement having a brake-lining carrier (2) and a driver (1),
wherein the brake-lining carrier (2) is connected to the driver (1) in a rotationally-fixed yet axially displaceable manner,
wherein the brake-lining carrier (2) has inner toothing which engages outer toothing of the driver (1),
wherein a damping part (20) is arranged between brake-lining carrier (2) and driver (1),
wherein the damping part (20) is arranged in the region of a missing tooth of the inner toothing of the brake-lining carrier (2), which inner toothing otherwise has teeth regularly spaced apart from one another in the circumferential direction,
**characterized in that**
the damping part (20) is manufactured from an elastomer and/or a rubber,
wherein the damping part (20) is formed in one piece, therefore formed in one part,
wherein the damping part (20) has an axially through-passing opening (21),
wherein the damping part (20) has another axially through-passing opening (22) which is arranged at a greater radial distance than the first axially through-passing opening (21), in particular which has a greater clear internal diameter than the further axially through-passing opening (22),
wherein the damping part (20) has a securing portion (50) at its axial end region, which securing portion contacts the end face of the brake-lining carrier (2).

2. A braking arrangement according to claim 1,
**characterized in that**
the braking arrangement can be actuated electromagnetically, wherein a coil winding suppliable with electricity is received in a coil core,
wherein an armature plate is connected to the coil core in a rotationally-fixed yet axially displaceable manner,
wherein a spring member presses upon the armature plate and is supported on the coil core,
wherein the armature plate is arranged between coil core and brake-lining carrier (2),
in particular wherein a counter braking surface is arranged on the side, remote from the coil core and the armature plate, of the brake-lining carrier (2).

3. A braking arrangement according to at least one of the preceding claims,
**characterized in that**
the damping part (20) with securing portion (50) covers a larger region in a circumferential direction than the opening (21) of the damping part (20).

4. A braking arrangement according to at least one of the preceding claims,
**characterized in that**
the damping part (20) has a cylindrical, in particular circular cylindrical, portion with which the damping part (20) contacts a tooth flank of a tooth of the outer toothing of the driver (1), in particular so that linear contact is present between damping part (20) and driver (1).

5. A braking arrangement according to at least one of the preceding claims,
**characterized in that**
the damping part (20) is flattened at its end region facing the driver (1),
in particular wherein this flattening is directed towards the tooth gap base of a tooth gap of the outer toothing of the driver (1).

6. A braking arrangement according to at least one of the preceding claims,
**characterized in that** the damping part (20) has a chamfer (51) at one or both axial end regions, in particular for the threading of the damping part (20), connected to the brake end shield, into the outer toothing of the driver (1).

7. A braking arrangement according to at least one of the preceding claims,
**characterized in that**
the axial region covered by the damping part (20) comprises the axial region covered by the inner toothing of the brake-lining carrier (2).

## Revendications

1. Dispositif de freinage comprenant un support (2) de garniture de frein et un organe d'entraînement (1),
lequel support (2) de garniture de frein est relié audit organe d'entraînement (1) avec verrouillage rotatif, mais avec faculté de déplacement axial,
ledit support (2) de garniture de frein étant muni d'une denture intérieure en prise avec une denture extérieure dudit organe d'entraînement (1),
une pièce d'amortissement (20) étant interposée entre ledit support (2) de garniture de frein et ledit organe d'entraînement (1),
ladite pièce d'amortissement (20) étant disposée dans la région d'une dent manquante de la denture intérieure du support (2) de garniture de frein dotée, pour le reste, de dents régulièrement espacées les unes des autres dans la direction périphérique,
**caractérisé par le fait que**
la pièce d'amortissement (20) est fabriquée en un élastomère et/ou en un caoutchouc,
ladite pièce d'amortissement (20) étant de réalisation monobloc, c'est-à-dire d'un seul tenant,
ladite pièce d'amortissement (20) étant pourvue d'un évidement (21) axialement ininterrompu,
ladite pièce d'amortissement (20) étant munie d'un autre évidement (22) axialement ininterrompu, situé à une plus grande distance radiale que le premier évidement (21) axialement ininterrompu,
lequel présente, en particulier, un plus fort diamètre intérieur que ledit autre évidement (22) axialement ininterrompu,
ladite pièce d'amortissement (20) comportant, au niveau de sa région extrême axiale, une zone d'arrêt (50) en applique contre la face extrême du support (2) de garniture de frein.

2. Dispositif de freinage selon la revendication 1,
**caractérisé par le fait que**
ledit dispositif de freinage peut être actionné électromagnétiquement, sachant qu'un enroulement de bobine, pouvant être alimenté électriquement, est logé dans un noyau de bobine,
un disque d'induit étant relié audit noyau de bobine avec verrouillage rotatif, mais avec faculté de déplacement axial,
sachant qu'un élément élastique, en appui sur ledit noyau de bobine, exerce une pression sur ledit disque d'induit,
lequel disque d'induit est interposé entre ledit noyau de bobine et le support (2) de garniture de frein,
sachant notamment qu'une surface de freinage complémentaire est située du côté dudit support (2) de garniture de frein qui est tourné à l'opposé dudit noyau de bobine et dudit disque d'induit.

3. Dispositif de freinage selon au moins l'une des revendications précédentes,
**caractérisé par le fait que**
la pièce d'amortissement (20) couvre dans la direction périphérique, conjointement à la zone d'arrêt (50), une plus grande région que l'évidement (21) de ladite pièce d'amortissement (20).

4. Dispositif de freinage selon au moins l'une des revendications précédentes,
**caractérisé par le fait que**
la pièce d'amortissement (20) comprend un tronçon cylindrique, notamment cylindrique droit, par lequel ladite pièce d'amortissement (20) est en applique contre un flanc d'une dent de la denture extérieure de l'organe d'entraînement (1), en particulier de telle sorte qu'un contact linéaire soit instauré entre ladite pièce d'amortissement (20) et ledit organe d'entraînement (1).

5. Dispositif de freinage selon au moins l'une des revendications précédentes,
**caractérisé par le fait que**
la pièce d'amortissement (20) est de réalisation aplatie au niveau de sa région extrême tournée vers l'organe d'entraînement (1),
cette zone aplatie étant notamment orientée en direction du fond d'un entredent de la denture extérieure dudit organe d'entraînement (1).

6. Dispositif de freinage selon au moins l'une des revendications précédentes,
**caractérisé par le fait que**
la pièce d'amortissement (20) est pourvue d'un chanfrein (51) au niveau d'une, ou des deux région(s) extrême(s) axiale(s), notamment en vue de l'insertion, dans la denture extérieure de l'organe d'entraînement (1), de ladite pièce d'amortissement (20) reliée au bouclier de palier de freinage.

7. Dispositif de freinage selon au moins l'une des revendications précédentes,
**caractérisé par le fait que**
la région axiale, couverte par la pièce d'amortissement (20), inclut la région axiale couverte par la denture intérieure du support (2) de garniture de frein.
